# EUROPEAN PATENT APPLICATION

(11) **EP 4 592 817 A1**
(43) Date of publication of application: **30.07.2025**
(21) Application number: 25153752.8
(22) Date of filing: 24.01.2025
(51) Int. Cl.: G06F 3/12

(54) **NON-TRANSITORY COMPUTER-READABLE STORAGE MEDIUM STORING PRINTING CONTROL PROGRAM, PRINTING CONTROL DEVICE, PRINTING METHOD**

(30) Priority: 26.01.2024 JP 2024009932
(71) Applicant: Seiko Epson Corporation, Tokyo 160-8801 (JP)
(72) Inventor: MATSUZAWA, Tomoki, Suwa-shi, 392-8502 (JP)
(74) Representative: Lewis Silkin LLP

(57) **Abstract**

According to an aspect of the present disclosure, there is provided a non-transitory computer-readable storage medium storing a printing control program, the printing control program causing a computer to execute first acquisition processing, second acquisition processing, and notification processing. In the first acquisition processing, a first status concerning a print job of a printer is acquired together with an instruction of status display from a general-purpose printer driver. In the second acquisition processing, a second status concerning the print job different from the first status is acquired from the printer not via the general-purpose printer driver. In the notification processing, a status concerning the print job of the printer is notified to a user based on the first status and the second status.

## Description

The present application is based on, and claims priority from JP Application Serial Number 2024-009932, filed January 26, 2024, the disclosure of which is hereby incorporated by reference herein in its entirety.

### BACKGROUND

### 1. Technical Field

The present disclosure relates to a non-transitory computer-readable storage medium storing a printing control program, a printing control device, and a printing method.

### 2. Related Art

JP-A-2021-43547 discloses a technique for reducing the time and effort of a user required for downloading and installing a driver specific to a printer vendor even in an environment in which an OS (Operating System) standard printer driver is installed.

JP-A-2021-43547 is an example of the related art.

A general-purpose printer driver such as an OS-standard printer driver is not adapted to all statuses that can be notified by a driver specific to a printer vendor. Therefore, the general-purpose printer driver cannot sufficiently notify a status. Thus, it is desired to develop a technique that can notify a sufficient status in printing processing using a general-purpose printer driver.

Note that the technique described in JP-A-2021-43547 is a technique for, in order to execute printing using an installed driver specific to a printer vendor without using an OS standard printer driver, installing the driver and cannot solve such a problem.

### SUMMARY

According to an aspect of the present disclosure, there is provided a non-transitory computer-readable storage medium storing a printing control program, the printing control program causing a computer to execute: first acquisition processing of acquiring a first status concerning a print job of a printer together with an instruction for status display from a general-purpose printer driver; second acquisition processing of acquiring a second status concerning the print job different from the first status from the printer not via the general-purpose printer driver; and notification processing of notifying a status concerning the print job of the printer to a user based on the first status and the second status.

According to an aspect of the present disclosure, there is provided a printing control device including: a general-purpose printer driver; a first acquisition processing unit configured to acquire a first status concerning a print job of a printer together with an instruction for status display from the general-purpose printer driver; a second acquisition processing unit configured to acquire a second status concerning the print job different from the first status from the printer not via the general-purpose printer driver; and a notification processing unit configured to notify a status concerning the print job of the printer to a user based on the first status and the second status.

According to an aspect of the present disclosure, there is provided a printing method including: first acquisition processing of acquiring a first status concerning a print job of a printer together with an instruction for status display from a general-purpose printer driver; second acquisition processing of acquiring a second status concerning the print job different from the first status from the printer not via the general-purpose printer driver; and notification processing of notifying a status concerning the print job of the printer to a user based on the first status and the second status.

### BRIEF DESCRIPTION OF THE DRAWINGS

FIG. 1 is a block diagram illustrating a configuration example of a print system according to an embodiment.
FIG. 2 is a sequence diagram illustrating a first example of printing processing in the print system illustrated in FIG. 1.
FIG. 3 is a diagram illustrating an example of a user interface image displayed in the printing processing illustrated in FIG. 2.
FIG. 4 is a diagram illustrating another example of the user interface image displayed in the printing processing illustrated in FIG. 2.
FIG. 5 is a flowchart for explaining a processing example in a vendor auxiliary application program in the printing processing illustrated in FIG. 2.
FIG. 6 is a diagram illustrating an example of a support status database used in the print system illustrated in FIG. 1.
FIG. 7 is a sequence diagram illustrating a second example of the printing processing in the print system illustrated in FIG. 1.
FIG. 8 is a diagram illustrating an example of a user interface image displayed in the printing processing illustrated in FIG. 7.
FIG. 9 is a diagram illustrating an example of a hardware configuration of a device.

### DESCRIPTION OF EMBODIMENTS

An embodiment of the present disclosure is explained below with reference to the drawings. Figures are merely exemplification for explaining the embodiment of the present disclosure. Not all of elements explained in the embodiment of the present disclosure are essential elements of the present disclosure.

### Embodiment

### Configuration of a system

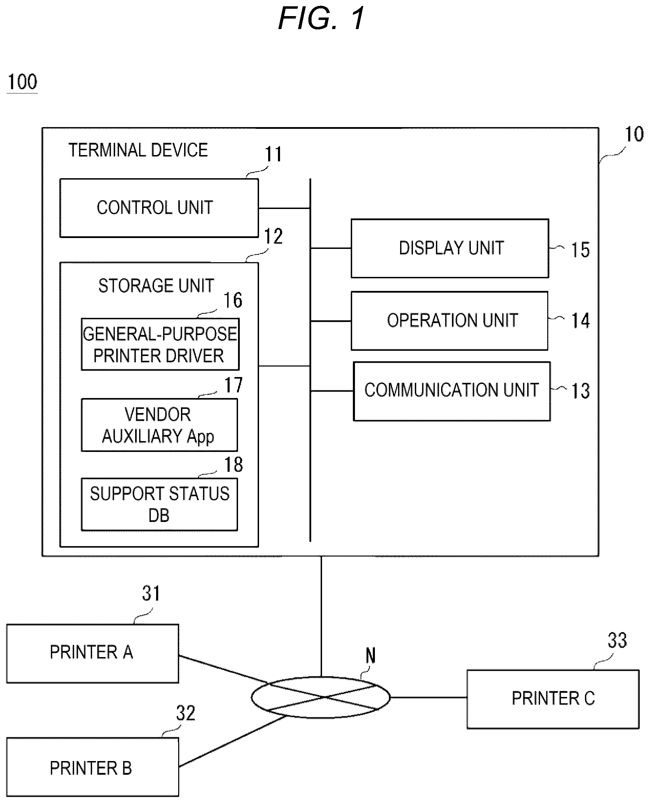

An exemplary configuration of a print system according to the present embodiment is explained with reference to FIG. 1. FIG. 1 is a block diagram illustrating the configuration example of the print system according to the embodiment.

As illustrated in FIG. 1, a print system 100 according to the present embodiment may include a terminal device 10, a printer A(31), a printer B(32), and a printer C(33).

The terminal device 10 is an information processing device including a communication function such as a personal computer (PC), a smartphone, or a tablet terminal and can be used by a user who desires printing. The terminal device 10 is connected to the printer A(31), the printer B(32), and the printer C(33) via a network N for, for example, processing of transmitting a print request. Since the terminal device 10 controls printing, the terminal device 10 can be referred to as printing control device. Although not illustrated, the print system 100 can include a plurality of terminal devices 10.

All of the printer A(31), the printer B(32), and the printer C(33) are example of a printer and, when receiving print data, can print the print data on a medium. The printers produce a print by performing such printing. For convenience, the print system 100 is explained on the premise that three printers are provided in the print system 100 as explained above. However, at least one printer only has to be provided in the print system 100. The printers only have to be devices having a communication function and a print function but may be a multifunction peripheral having other functions such as a scanner function, a copy function, and a facsimile transmission function. The printers can also be referred to as printing apparatus or image forming apparatus. Printing schemes in the printers do not matter. Various printing schemes such as an inkjet printing scheme and a laser printing scheme can be applied.

The print system 100 performs printing from a selected printer among the printer A(31), the printer B(32), and the printer C(33) according to user operation from the terminal device 10. A configuration example of the terminal device 10 is explained in detail below. Note that explanation of a configuration example of the printers is omitted.

### 1. Configuration of the terminal device 10

As illustrated in FIG. 1, the terminal device 10 can include a control unit 11, a storage unit 12, a communication unit 13, an operation unit 14, and a display unit 15.

The control unit 11 controls the entire terminal device 10. The control unit 11 can include, for example, an arithmetic processing device, a working memory, and a storage device that stores a control program, parameters, and the like. The arithmetic processing device can be a central processing unit (CPU), a graphics processing unit (GPU), or the like. The control unit 11 can also be implemented as a system on a chip (SoC). As it is seen from the examples explained above, the control unit 11 can be configured to store the control program in an executable state. However, the control unit 11 can also be configured to store a part of the control program as a circuit configuration like a field programable gate array (FPGA) or can be configured as a dedicated circuit.

The control program can include a program for the arithmetic processing device to execute processing relating to printing in cooperation with the storage unit 12, the communication unit 13, the operation unit 14, and the display unit 15. The control program can include an OS. Since the OS is an OS equipped in the terminal device 10, the OS is an OS of a type corresponding to a model and the like of the terminal device 10. The control program can include a Web browser in the OS or outside the OS. In the following explanation, an example in which at least a part of the control program is stored in the storage unit 12 provided separately from the control unit 11 is explained. However, the storage unit 12 may be a part of a storage device in the control unit 11. That is, the storage unit 12 can be grasped as a part of the control unit 11.

The storage unit 12 is, for example, a storage device by a hard disk drive, a solid state drive, or another memory. The storage unit 12 stores, as part of the control program, a general-purpose printer driver 16 and a vendor auxiliary Application program 17 explained below in a state executable from the control unit 11. In the following explanation, the vendor auxiliary Application program is abbreviated as vendor auxiliary App. The storage unit 12 can store various data such as a support status database (DB) 18 and a file to be printed. The support status DB 18 can also be included in the vendor auxiliary App 17. The support status DB 18 is explained below together with an example of printing processing.

The communication unit 13 is a part that conforms to a predetermined communication standard such as various mobile communication standards and Wi-Fi (registered trademark; the same applies below) standard and communicates with an external device such as the printer A(31), the printer B(32), and the printer C(33) by radio or wire via the network N. The communication unit 13 can be configured by one or a plurality of communication interfaces capable of performing such communication.

The operation unit 14 is a part that receives operation by a user of the terminal device 10 and can be referred to as operation reception unit as well. The operation unit 14 can be implemented, for example, by any one or a plurality of physical buttons, a touch panel mounted on the display unit 15, a pointing device, a keyboard, and the like. In a configuration in which the operation unit 14 includes the touch panel, the operation unit 14 including the display unit 15 and the touch panel can be referred to as operation panel of the terminal device 10.

The display unit 15 is a part for displaying a user interface (UI) image for operating the terminal device 10 and is configured by a display device such as a liquid crystal display or an organic electroluminescence display. The display unit 15 can also include a display and a drive circuit for driving the display.

The general-purpose printer driver 16 is explained. The general-purpose printer driver 16 is an OS standard printer driver included in the OS included in the control program or attached to the OS. The general-purpose printer driver 16 can be, for various types of printers, a program capable of controlling the printers to execute printing. The general-purpose printer driver 16 can be referred to as OS general-purpose printing program or general-purpose printing program as well.

The general-purpose printer driver 16 is a driver that uses a general-purpose protocol for a search for a printer and for printing. The general-purpose printer driver 16 uses, for example, mDNS/DNS-SD for the search for a printer and uses IPP for the printing in the printer. Here, DNS is an abbreviation of Domain Name System. mDNS is an abbreviation of multicast DNS. DNS-SD is an abbreviation of DNS Service Discovery. IPP is an abbreviation of Internet Print Protocol.

As it is seen from this example, the general-purpose printer driver 16 can be, for example, an IPP Class driver. IPP is an example of a standard protocol for controlling the management and printing of printers. The IPP acquires and controls printer information according to HTTP (Hyper Text Transfer Protocol) POST requests and responses. In the IPP, it is possible to perform printer setting and printer state acquisition. Here, secure communication can be performed by using HTTPS (HTTP Secure) instead of the HTTP.

The vendor auxiliary App 17 is explained. The vendor auxiliary App 17 is an application program that assists the general-purpose printer driver 16 and is used to extend the functions of the general-purpose printer driver 16. Therefore, the general-purpose printer driver 16 can include functions of starting the vendor auxiliary App 17 and transmitting a print job to the vendor auxiliary App 17. The vendor auxiliary App 17 can be, for example, a Print Support Application (PSA).

The vendor auxiliary App 17 can be a program for assisting the general-purpose printer driver 16 and causing a computer to execute print control suitable for the performance of a target printer, that is, print control for supporting a unique function of the printer. Here, the computer indicates the terminal device 10 or the control unit 11. When acquiring a print job from the general-purpose printer driver 16, the vendor auxiliary App 17 can convert the print job such that printing using a unique function for a designated printer can be executed by the printer.

The vendor auxiliary App 17 is an application program provided by, for example, a vendor of a printer. The vendor auxiliary App 17 can be provided to the user of the terminal device 10 by being disclosed in, for example, an application store of an OS provider. Alternatively, the vendor auxiliary App 17 can be provided to the user by being included in the OS or attached to the OS.

The vendor auxiliary App 17 includes a printing control program explained below. That is, the printing control program can also be implemented as, for example, a PSA. Schematically explained, the printing control program is used to cause the display unit 15 to display a job status that is a status of a print job of a printer caused to perform printing, such as the printer A(31), such as a status of the printer. Note that the status of the print job of the printer can include the status of the printer. In particular, the printing control program makes it possible to cause the display unit 15 to display even a status that cannot be provided by the general-purpose printer driver 16 if the status is a status that can be provided by the printer.

Specifically explained, the printing control program is a program for causing a computer to execute first acquisition processing, second acquisition processing, and notification processing explained below. Here, the computer also indicates the terminal device 10 or the control unit 11. In the following explanation, an example in which a print request is made from the terminal device 10 to the printer A(31) is explained. The same applies to other printers.

In the first acquisition processing, a first status concerning a print job of the printer A(31) is acquired from the general-purpose printer driver 16 together with an instruction to display a status. In the first acquisition processing, the first status can be acquired by interprocess communication between the general-purpose printer driver 16 and the printing control program. As it is seen from the acquisition from the general-purpose printer driver 16, the first status is a status that can be acquired by the general-purpose printer driver 16. Specifically, the general-purpose printer driver 16 can acquire the status of the print job from the printer A(31) according to a general-purpose protocol such as an IPP.

In the second acquisition processing, a second status concerning the print job different from the first status is acquired from the printer A(31) not via the general-purpose printer driver 16. In the second acquisition processing, the second status can be acquired by communicating with the printer A(31) via the communication unit 13. Here, since the second status is different from the first status, it can be said that the second status is a status not supported by at least the general-purpose printer driver 16. For example, the second status can be any one of all statuses excluding the first status among all statuses that can be provided by a driver specific to a printer vendor. That is, the second status that can be acquired can be all the statuses excluding the first status among all the statuses that can be provided by the driver specific to the printer vendor. However, parts of the first status and the second status may be common.

The notification processing notifies a status concerning the print job of the printer A(31) to the user of the terminal device 10 based on the first status and the second status. The notification processing can be performed by causing the display unit 15 to display the status. The notification processing can involve processing of outputting notification sound from a not-illustrated speaker.

In other words, in the present embodiment, a printing method including the first acquisition processing, the second acquisition processing, and the notification processing explained above can be provided.

Further, in other words, the terminal device 10 includes the general-purpose printer driver 16 and a first acquisition processing unit, a second acquisition processing unit, and a notification processing unit explained below.

The first acquisition processing unit acquires, from the general-purpose printer driver 16, a first status concerning the print job of the printer A(31) together with an instruction to display a status. Since the first acquisition processing unit acquires the first status by communication with the general-purpose printer driver 16, the first acquisition processing unit can be referred to as driver processing unit. The second acquisition processing unit acquires a second status concerning the print job different from the first status from the printer A(31) not via the general-purpose printer driver 16. Since the second acquisition processing unit acquires the second status by communication with the printer, the second acquisition processing unit can also be referred to as printer processing unit. The notification processing unit notifies a status concerning the print job of the printer A(31) to the user based on the first status and the second status.

### Effects of the present embodiment

Before a more specific example of the printing processing in the present embodiment is explained, effects by the present embodiment are explained.

As explained above, in the print system 100, the printing control program can notify the status based on the second status. Thus, according to the present embodiment, in the printing processing using the general-purpose printer driver, even a status that the general-purpose printer driver cannot cope with can be notified. Therefore, it can be said that a sufficient status can be notified.

In order to supplement such effects, the present embodiment, and a print system according to a comparative example are compared. In the print system according to the comparative example, a printer is controlled using a general-purpose printer driver incorporated in the Windows (registered trademark; the same applies below) OS as a standard without using a printer driver of a vendor. In the general-purpose printer driver in this comparative example as well, a general-purpose protocol is used for a search for a printer and printing. The general-purpose printer driver acquires a status of a print job according to an IPP, which is a general-purpose protocol, and displays the status with a notification function of the OS. In the case of Windows, the status is displayed as a toast notification.

Further, in the general-purpose printer driver in the comparative example as well, a mechanism for starting a vendor auxiliary application program linked with a printer and customizing a custom print setting and IPP communication at the time of printing is provided. Concerning notification, a mechanism for, when the user selects a UI image of the toast notification displayed by the notification function of the OS, the OS starting the general-purpose printer driver and passing, to the vendor auxiliary application program, a status of an acquired print job is provided. Accordingly, an individual message can be displayed according to the status in the vendor auxiliary Application program. Naturally, the vendor auxiliary application and the general-purpose printer driver according to the comparative example do not include the printing control program explained above.

However, since only a general status is defined in the IPP, in the mechanism according to the comparative example, the general-purpose printer driver cannot acquire a status that is not defined in a detailed definition of an error or the like. Therefore, in the mechanism according to the comparative example, a status not defined in the IPP cannot be notified in the vendor auxiliary application program as well and, for example, a detailed error solution corresponding to the status cannot be informed to the user.

As explained above, in the comparative example explained above, since the general-purpose printer driver supports not all of statuses, a status sufficient for the user cannot be notified in the printing processing using the general-purpose printer driver. On the other hand, as explained above, according to the present embodiment, a mechanism for additionally acquiring, as the second status, a status that is not defined by a general-purpose printer driver such as a detailed status is introduced. Thus, according to the present embodiment, it can be said that a status sufficient for the user can be notified to the user in the printing processing using the general-purpose printer driver 16 as well compared with the comparative example.

### First example of the printing processing

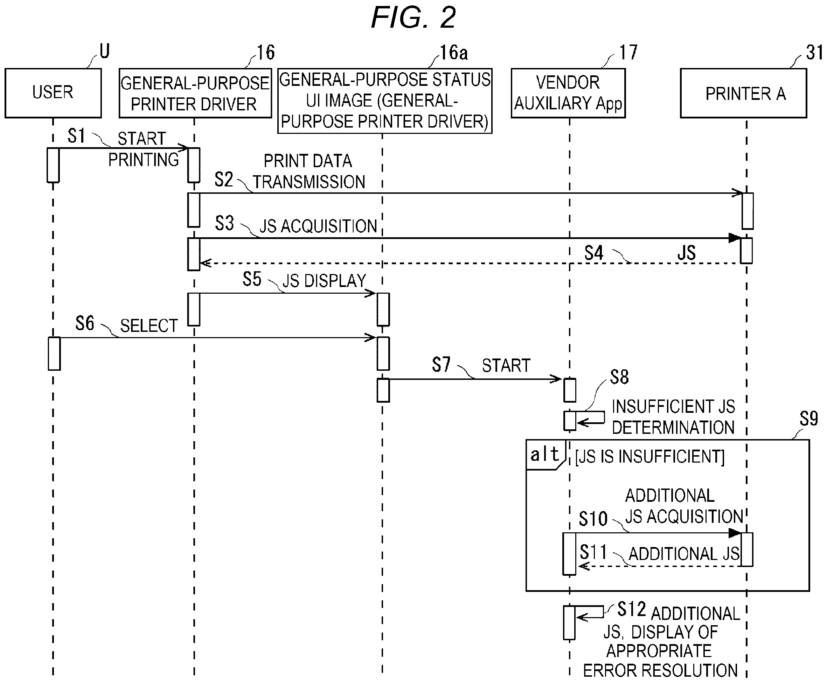

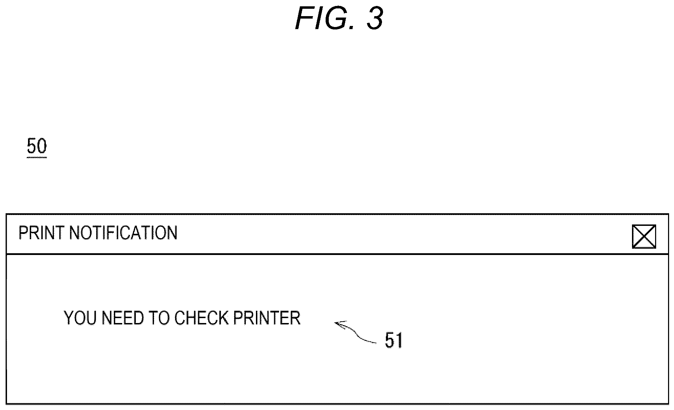

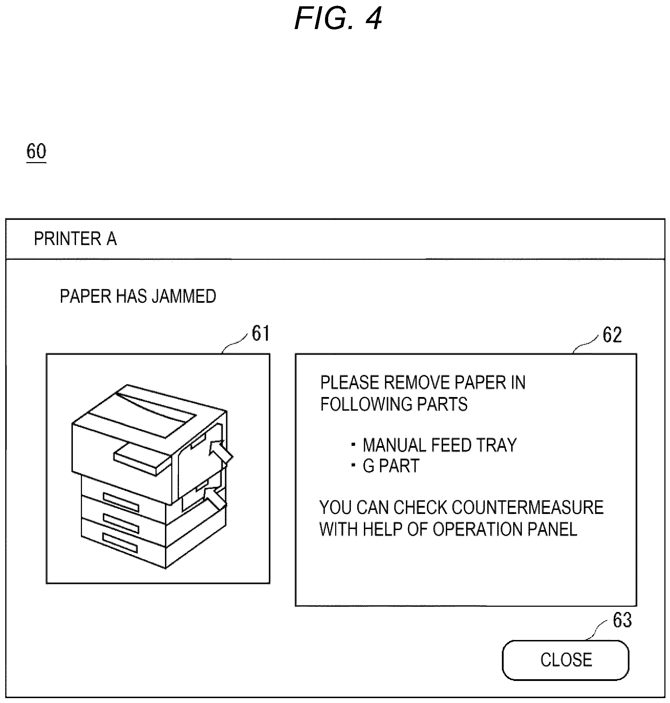

A first example of the printing processing according to the present embodiment is explained with reference to FIGS. 2 to 6. FIG. 2 is a sequence diagram illustrating the first example of the printing processing in the print system 100 illustrated in FIG. 1. FIG. 3 is a diagram illustrating an example of a UI image displayed in the printing processing illustrated in FIG. 2. FIG. 4 is a diagram illustrating another example of the UI image displayed in the printing processing illustrated FIG. 2. In the following explanation as well, an example in which the vendor auxiliary App 17 is implemented with a printing control program for performing the first acquisition processing, the second acquisition processing, and the notification processing is explained.

The first example is an example in which the vendor auxiliary App 17 displays a status to be notified on a UI image of the vendor auxiliary App 17 itself.

First, a user U starts an application program for, for example, starting and editing a print target file such as a document file. Then, the user U performs, from the operation unit 14, for example, operation for selecting the printer A(31) in print setting of the print target file, whereby the general-purpose printer driver 16 receives an instruction to start printing (step S1).

The general-purpose printer driver 16 converts the print target file into print data that is data of a printable format and transmits a print job including the print data to the printer A(31) (step S2). Before this conversion, the user U can also instruct print setting using an extended function in the vendor auxiliary App 17 as print setting for the printer A(31). In this case, the general-purpose printer driver 16 only has to start the vendor auxiliary App 17, and the vendor auxiliary App 17 only has to receive print setting operation using the extended function from the user U, perform conversion into print data based on the print setting, and generate a print job.

After the processing of step S2, the general-purpose printer driver 16 periodically requests the printer A(31) to acquire a job status (JS), which is a status of the print job (step S3), and receives a first status as the JS of a response to the request (step S4). The JS received here is the first status. IPP communication is desirably used for communication in steps S3 and S4. Examples of a general-purpose status that can be acquired by the IPP include Printing, Offline, PaperOut, Error, and User Intervention.

The general-purpose printer driver 16 periodically requests display of the JS on a general-purpose status UI image 16a on the inside (step S5) and, as a response to the request, the general-purpose status UI image 16a displays the JS based on the first status received in step S4 to perform notification. The general-purpose status UI image 16a only has to display the received first status itself as the JS but may display the JS applied with processing or the like based on the first status. The general-purpose status UI image 16a can include a sentence 51 indicating that a printer needs to be checked as in, for example, a UI image 50 illustrated in FIG. 3. Accordingly, the user U can check the first status on the display unit 15. FIG. 3 illustrates an example in which a status indicating that user operation is necessary in order to correct an error state is received in step S4 as the first status,.

Subsequently, the general-purpose status UI image 16a displaying the first status such as the UI image 50 receives a selection operation by the operation unit 14 from the user U (step S6). The general-purpose status UI image 16a includes a button for starting the vendor auxiliary App 17 or a button for acquiring a more detailed or accurate status and may receive selection operation for selecting the button in step S6.

The general-purpose status UI image 16a that has received the selection operation in step S6 starts the vendor auxiliary App 17 with the first status received in step S4 set as an argument (step S7). Based on the first status passed from the general-purpose printer driver 16, the vendor auxiliary App 17 determines whether information is insufficient as the JS to be notified (step S8). whether information is insufficient as the JS to be notified can indicate whether there is information that can be additionally provided or information that can be more accurately provided and indicate whether the JS is insufficient in the passed JS.

The vendor auxiliary App 17 performs processing based on a determination result in step S8 (step S9). When the information is not insufficient as the JS to be notified, the vendor auxiliary App 17 does not perform the processing in step S9.

On the other hand, when the information is insufficient as the JS to be notified in step S9, the vendor auxiliary App 17 makes a request to acquire an insufficient status, that is, a status of an insufficient type from the printer A(31) based on the first status (step S10). As explained above, the second acquisition processing can include processing of requesting the printer A(31) to transmit, as the second status, a status of a type corresponding to the received first status. Then, as a response to the request, the vendor auxiliary App 17 receives the second status, which is the insufficient status, from the printer A(31) (step S11). As explained above, the vendor auxiliary App 17 additionally acquires, as the second status, a status based on the first status set as the argument.

Communication in steps S10 and S11 is desirably executed according to a protocol in which the IPP is vendor-extended or another SNMP (Simple Network Management Protocol) or a protocol unique to the vendor.

Presence or absence of support for the second status depends on a printer for each of types of the second status. Examples of the second status include the following. Examples of the second status include no ink residual amount for colors, no waste ink box residual amount, cover open (main, waste ink box), roll paper detection failure, and paper jam. Here, the waste ink box is a box for discarding ink used in maintenance such as nozzle cleaning. The cover open is a status indicating that a cover is open. Examples of the cover include covers of various parts such as a main cover of the printer and a cover of the waste ink box. In some case, the cover is supported as a common status or as a status of an individual part depending on a printer. The status of the paper jam can include information indicating a position where paper is jammed.

Subsequently, the vendor auxiliary App 17 displays a status based on the acquired second status on a UI image of the vendor auxiliary App 17 and also displays a detailed error resolution corresponding to the status to notify guidance for eliminating an error to the user U (step S12). Specific processing examples of steps S8 to S12 are explained below.

The vendor auxiliary App 17 can perform such guidance by, for example, displaying the UI image 60 illustrated in FIG. 4. A UI image 60 is a UI image for notifying the JS or the like of the printer A(31) and can include a sentence 62 for informing a countermeasure such as a detailed error resolution corresponding to the second status, which is an additional status, together with an image 61 of the printer A(31). The UI image 60 can include a button 63 for closing the UI image 60.

The example illustrated in FIG. 4 is an example in which a status indicating that a paper jam has occurred in two places in total of a manual feed tray and a G portion is acquired in step S11 as the second status. Note that the G portion indicates a portion of "G" attached to the printer A(31) by a sticker or the like. Thus, the sentence 62 can include this status and a sentence indicating that a countermeasure for the status can be checked with help on the operation panel. Arrows indicating the two portions are desirably superimposed on an illustration of the printer A(31) and included in the image 61. Naturally, although an example in which the countermeasure for the status can be checked with help on the operation panel is explained here, in a simpler example, the countermeasure can also be specifically described in the sentence 62.

In order to perform the guidance in step S12, the vendor auxiliary App 17 is configured to be capable of obtaining information such as the sentence 62 indicating the countermeasure for the second status for each of the types of the second status and incorporating the information in the UI image 60. For example, although not illustrated, the vendor auxiliary App 17 can obtain the countermeasure corresponding to the second status and incorporate the countermeasure in the UI image 60 by storing a DB describing the countermeasure for each second status. The countermeasure can also be incorporated in the UI image 60 by describing countermeasures in association with the statuses in the support status DB 18. That is, a relation between the second status and the countermeasure can be included in the vendor auxiliary App 17 itself or can be stored in a table or the like that can be referred to from the vendor auxiliary App 17.

As explained above, the user U can display the UI image 60 illustrated in FIG. 4 and receive the guidance including the countermeasure such as the error resolution by performing operation for selecting the general-purpose status UI image such as the UI image 50 illustrated in FIG. 3. Here, the explanation is based on the premise that an error has occurred. However, when an error has not occurred, information indicating a current situation of the printer A is included in the UI image 60.

When it is determined in step S8 that the status is not insufficient, in step S12, the vendor auxiliary App 17 displays a status based only on the acquired first status on its UI image of the vendor auxiliary App 17. If information indicating a countermeasure such as an error resolution corresponding to the status is obtained from the general-purpose printer driver 16, the vendor auxiliary App 17 desirably notifies guidance to the user U by displaying a UI image including the countermeasure.

However, if the vendor auxiliary App 17 displays the countermeasure corresponding to the first status regardless of whether the information indicating the countermeasure corresponding to the status is obtained from the general-purpose printer driver 16, the user U can easily take measures such as error resolution. For that reason, the vendor auxiliary App 17 only has to obtain information indicating the countermeasure corresponding to the first status and incorporate the information in the UI image. Like the relation between the second status and the countermeasure, a relation between the first status and the countermeasure can be included in the vendor auxiliary App 17 itself or can be stored in a table or the like that can be referred to from the vendor auxiliary App 17.

The second acquisition processing can include determination processing of determining whether the second status is necessary as it is determined in step S8 whether there is a status in which information is insufficient, that is, whether additional or more accurate information can be provided. Then, as exemplified in steps S9 to S11, the second acquisition processing desirably acquires the second status when it is determined that the second status is necessary and does not acquire the second status when it is determined that the second status is unnecessary. Further, as exemplified in step S12, when it is determined in the determination processing that the second status is unnecessary, in the notification processing, it is desirable to notify the status of the printer A(31) to the user based on the first status. Similarly, as exemplified in step S12, when it is determined that the second status is necessary in the determination processing, in the notification processing, it is desirable to acquire the second status and notify a status of the printer A(31) based on the second status to the user.

As explained above, the status to be notified is, for the second status corresponding to the first status, the status based on the second status and is the status based on the first status when the second status corresponding to the first status is absent. Thus, statuses of the same type are included in the status to be notified without being redundant. The user U is not confused.

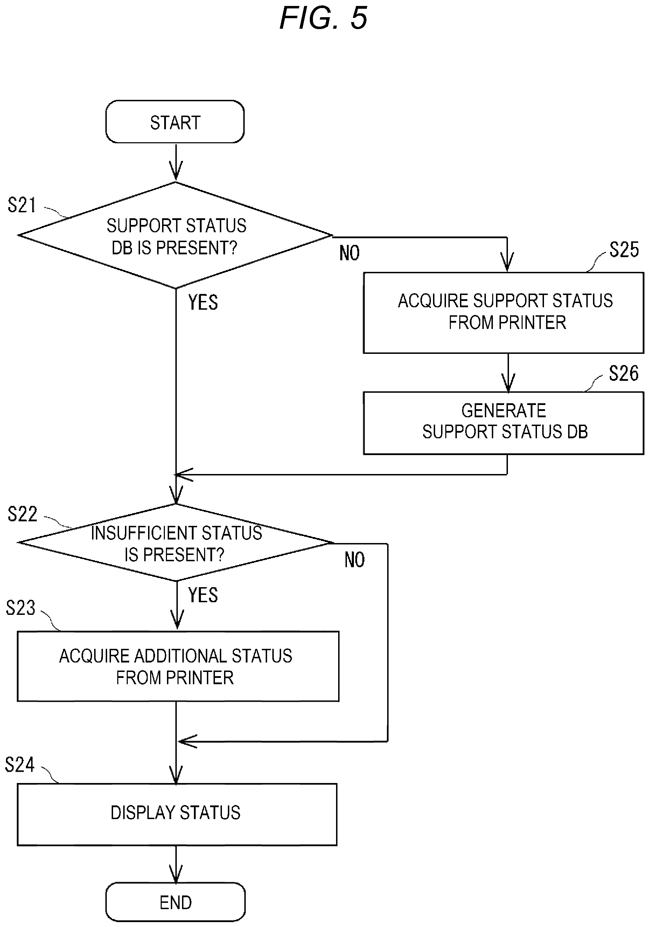

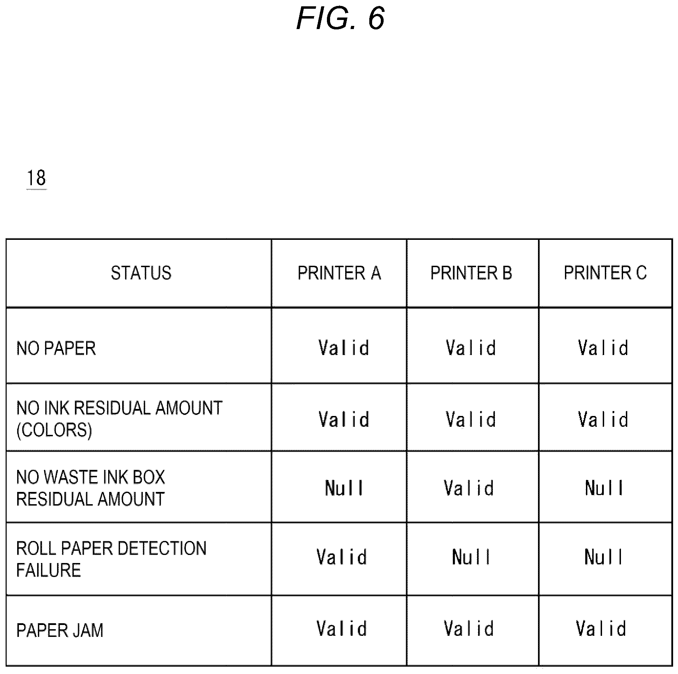

Subsequently, a specific processing example in steps S8 to S12 including the determination of the insufficient status and the notification of the guidance of the countermeasure is explained with reference to FIGS. 4 to 6. FIG. 5 is a flowchart for explaining a processing example in the vendor auxiliary App 17 in the printing processing illustrated in FIG. 2. FIG. 6 is a diagram illustrating an example of the support status DB 18 used in the print system 100 illustrated in FIG. 1.

First, as explained above, the general-purpose printer driver 16 starts the vendor auxiliary App 17 with the first status set as an argument. Subsequently, the vendor auxiliary App 17 determines whether the support status DB 18 is present in the storage unit 12 (step S21).

In the case of YES in step S21, the vendor auxiliary App 17 refers to the support status DB 18 based on the first status and determines a status in which the information is insufficient (step S22). The support status DB 18 can include, concerning connectable printers, for each types of a status, information indicating whether the status is supported, for example, as illustrated in FIG. 6. In FIG. 6, an example in which "Valid" is described when the status is supported and "Null" is described when the status in not supported is illustrated.

Then, the vendor auxiliary App 17 refers to the support status DB 18 and, if a status of the same type as the first status is supported by the printer A(31) that performs printing, determines in step S22 that the status is not insufficient. For example, when the first status is "no paper error", the vendor auxiliary App 17 searches through the support status DB 18 for information of the printer A(31) concerning "no paper" that is the same type as the status "no paper error". In this case, the information is "Valid" in the vendor auxiliary App 17. Thus, the vendor auxiliary App 17 determines that the status is a status supported by the printer A(31) and is a status that does not need to additionally provide information, that is, determines that the status is not insufficient. As explained above, when a status that can provide more accurate or detailed information than the information provided in the first status is absent for the printer A(31) and the first status is sufficient, the vendor auxiliary App 17 determines in step S22 that the status is not insufficient.

On the other hand, the vendor auxiliary App 17 refers to the support status DB 18 and, when a status of the same type as the first status is absent, determines in step S22 that the status is insufficient in step S22. Even when a status of the same type as the first status is present, when information of the printer A(31) that performs printing for the status is not supported by "Null", the vendor auxiliary App 17 determines in step S22 that the status is insufficient. For example, if the first status is "user operation is necessary to correct an error state", this status is absent in the support status DB 18 exemplified in FIG. 6. Thus, the vendor auxiliary App 17 determines that the status is a status not supported by the printer A(31) and is a status capable of additionally providing information, that is, that the status is insufficient.

As explained above, in the determination processing explained above, it may be determined whether the second status is necessary or unnecessary by referring to a database indicating whether the second status is necessary or unnecessary for each of types of a status like the support status DB 18.

In the case of YES in step S22, the vendor auxiliary App 17 acquires the second status, which is an additional status, from the printer A(31) (step S23). Then, the vendor auxiliary App 17 incorporates a status based on the acquired second status in the UI image 60 and displays the status (step S24) and ends the processing. In the case of NO in step S22, the vendor auxiliary App 17 proceeds to step S24 not through step S23, incorporates a status based on the first status in the UI image and displays the status as in the UI image 60 and ends the processing. In step S24, the vendor auxiliary App 17 desirably includes, based on the relation between the second status or the first status and the countermeasure, the countermeasure in the UI image and displays the countermeasure as explained above.

On the other hand, in the case of NO in step S21, the vendor auxiliary App 17 acquires a support status, which is a job status list supported from the printer A(31) (step S25). Subsequently, the vendor auxiliary App 17 generates the support status DB 18 (step S26).

In step S26, for example, the vendor auxiliary App 17 desirably statically stores a list of supported job statuses acquired by communicating with the printer A(31) in a user environment such as the storage unit 12. After the processing in step S26, the vendor auxiliary App 17 only has to proceed to the processing in step S22.

Alternatively, the processing of generating the support status DB 18 in step S26 can also be executed as follows. For example, the vendor auxiliary App 17 stores a list of supported job statuses for each of model in a user environment such as the storage unit 12 in advance as static information. Then, the vendor auxiliary App 17 reads the information for at least the printer A(31) currently performing printing and generates the support status DB 18.

In the first example of the printing processing, the vendor auxiliary App 17 can additionally acquire insufficient information from the printer A(31) and display the information based on the status of the print job acquired and displayed by the OS-standard general-purpose printer driver 16 in the IPP as explained above. Accordingly, the vendor auxiliary App 17 can also inform a countermeasure such as a detailed error resolution corresponding to the additional status to the user U.

That is, in the first example, it is possible not only to acquire a status insufficient in the IPP and inform a detailed error resolution to the user but also to, by additionally acquiring and displaying only insufficiency, avoid redundancy with a general error displayed by the OS and avoid confusion of the user.

### Second example of the printing processing

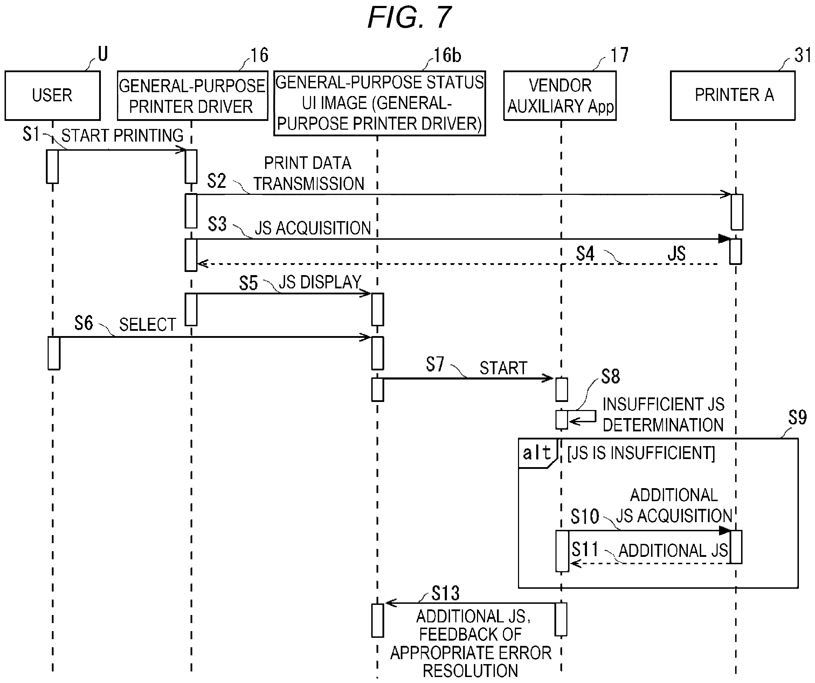

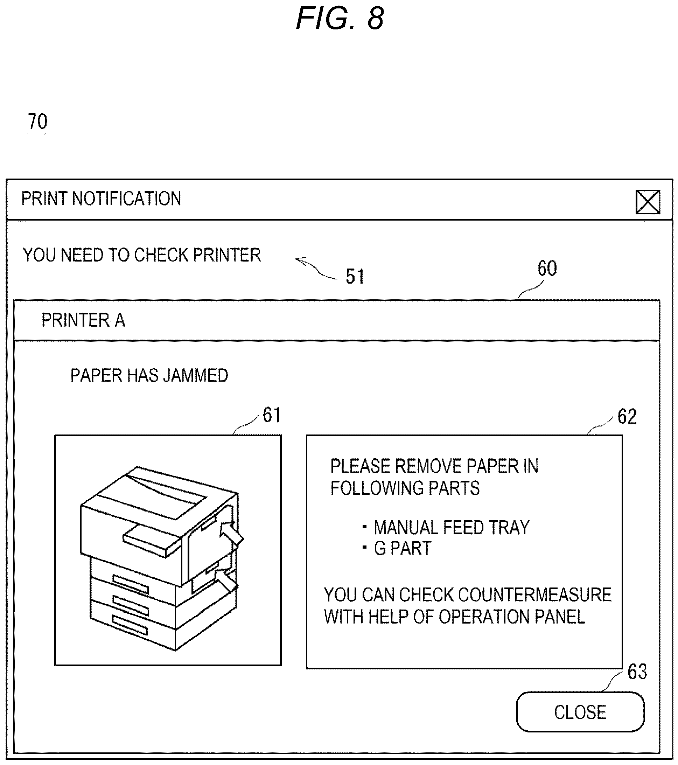

A second example of the printing processing according to the present embodiment is explained with reference to FIGS. 7 and 8. FIG. 7 is a sequence diagram illustrating a second example of the printing processing in the print system 100 illustrated in FIG. 1. FIG. 8 is a diagram illustrating an example of a UI image displayed in the printing processing illustrated in FIG. 7.

Unlike the first example, the second example is an example in which a status to be notified is displayed on a UI image for general-purpose status notification of the OS. That is, in notification processing in the second example, a status of the printer A(31) is notified via the general-purpose printer driver 16. Thus, in the second example as well, the processing in steps S1 to S11 in the first example is applied.

In the second example, instead of step S12, the vendor auxiliary App 17 feeds back additional information to a general-purpose status UI image 16b of the OS. Note that the general-purpose status UI image 16b indicates a UI image configured to embed the fed-back additional information in the general-purpose status UI image 16a.

The additional information may be, for example, the UI image 60 itself illustrated in FIG. 4 or may be mere character information or the like, or may include a status based on the second status or information indicating the status and a countermeasure for the status.

When the additional information is the UI image 60, the general-purpose status UI image 16b may be a UI image including the UI image 60 besides the sentence 51 in the UI image 50 illustrated in FIG. 3. That is, in this case, the general-purpose status UI image 16b can be a UI image 70 illustrated in FIG. 8. Naturally, the general-purpose status UI image 16b may be an image obtained by excluding the sentence 51 in the UI image 70 illustrated in FIG. 8.

In the second example, in addition to the effects according to the first example, since the display of the additional information is displayed in the general-purpose status UI image of the OS, there is an effect that the display of the status and the countermeasure for the status can be unified to some extent without depending on the vendor auxiliary App 17.

### Other modifications

The present disclosure is not limited to the embodiment explained above and can be modified as appropriate without departing from the gist of the present disclosure. For example, the system configuration of the print system, the configurations of the devices configuring the system, the configurations of the programs included in the devices, the processing procedures of the devices, and the like are not limited to the exemplified ones.

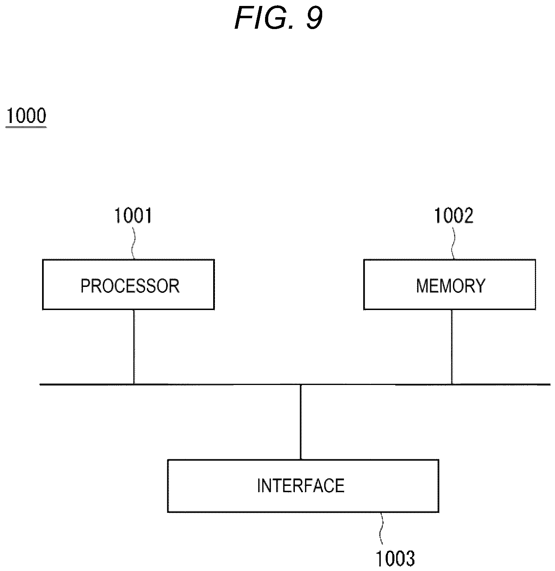

The devices provided in the print system according to the embodiment explained above may include, for example, a hardware configuration explained below. Here, the respective devices include the terminal device and the printers in the example illustrated in FIG. 1. FIG. 9 is a diagram illustrating an example of a hardware configuration of a device.

A device 1000 illustrated in FIG. 9 can include a processor 1001, a memory 1002, and an interface 1003. The interface 1003 can include, for example, a communication interface and an interface with an input and output device that are required according to the device.

The processor 1001 may be, for example, a CPU, a GPU, or a microprocessor unit (MPU) also referred to as microprocessor. The processor 1001 may include a plurality of processors. The memory 1002 is configured by, for example, a combination of a volatile memory and a nonvolatile memory. Functions in the devices are implemented by the processor 1001 reading a program stored in the memory 1002 and executing the program while exchanging necessary information via the interface 1003.

The program includes an instruction group (or software codes) for causing a computer to perform the one or more functions explained in the embodiment when the program is read in the computer. The program may be stored in a non-transitory computer-readable medium or a tangible storage medium. Not as a limitation but as an example, the computer-readable medium or the tangible storage medium includes a random-access memory (RAM), a read-only memory (ROM), a flash memory, a solid-state drive (SSD), or another memory technology. Not as a limitation but as an example, the computer-readable medium or the tangible storage medium includes a CD-ROM, a digital versatile disc (DVD), a Blu-ray (registered trademark) disk, or another optical disc storage or a magnetic cassette, a magnetic tape, a magnetic disk storage, or another magnetic storage device. The program may be transmitted on a transitory computer-readable medium or a communication medium. Not as a limitation but as an example, the transitory computer-readable medium or the communication medium includes a propagation signal of an electric, optical, acoustic, or another form.

The present disclosure is explained above with reference to the embodiment. However, the present disclosure is not limited to only the configuration in the embodiment explained above. It goes without saying that the present disclosure includes various modifications, alterations, and combinations that can be made by those skilled in the art within the scope of the disclosure of the claims of the present application.

## Claims

1. A non-transitory computer-readable storage medium storing a printing control program, the printing control program causing a computer to execute:
first acquisition processing of acquiring a first status concerning a print job of a printer together with an instruction of status display from a general-purpose printer driver;
second acquisition processing of acquiring a second status of the print job different from the first status from the printer not via the general-purpose printer driver; and
notification processing of notifying a status concerning the print job of the printer to a user based on the first status and the second status.

2. The non-transitory computer-readable storage medium storing the printing control program according to claim 1, wherein the printing control program is a Print Support Application.

3. The non-transitory computer-readable storage medium storing the printing control program according to claim 1 or claim 2, wherein the second acquisition processing includes processing of requesting the printer to notify a status of a type corresponding to the first status as the second status.

4. The non-transitory computer-readable storage medium storing the printing control program according to claim 1 or claim 2, wherein
the second acquisition processing includes determination processing of determining whether the second status is necessary or unnecessary, the second status is acquired when it is determined in the determination processing that the second status is necessary, and the second status is not acquired when it is determined in the determination processing that the second status is unnecessary, and
in the notification processing, when it is determined in the determination processing that the second status is unnecessary, the status of the printer is notified to the user based on the first status.

5. The non-transitory computer-readable storage medium storing the printing control program according to claim 4, wherein, in the determination processing, a database indicating whether the second status is necessary or unnecessary for each of types of the status of the print job is referred to and it is determined whether the second status is necessary or unnecessary.

6. The non-transitory computer-readable storage medium storing the printing control program according to claim 1 or claim 2, wherein, in the notification processing, the status of the printer is notified via the general-purpose printer driver.

7. A printing control device comprising:
a general-purpose printer driver;
a first acquisition processing unit configured to acquire a first status concerning a print job of a printer together with an instruction of status display from the general-purpose printer driver;
a second acquisition processing unit configured to acquire a second status concerning the print job different from the first status from the printer not via the general-purpose printer driver; and
a notification processing unit configured to notify a status concerning the print job of the printer to a user based on the first status and the second status.

8. A printing method comprising:
first acquisition processing of acquiring a first status concerning a print job of a printer together with an instruction of status display from a general-purpose printer driver;
second acquisition processing of acquiring a second status of the print job different from the first status from the printer not via the general-purpose printer driver; and
notification processing of notifying a status concerning the print job of the printer to a user based on the first status and the second status.
